Europäisches Patentamt

European Patent Office

Office européen des brevets

(19)

(11) Publication number: **0 240 071**
**B1**

(12)                 **EUROPEAN PATENT SPECIFICATION**

(45) Date of publication of the patent specification:
06.06.90

(51) Int. Cl.⁵: **B65D 81/34, H05B 6/64**

(21) Application number: 87200537.6

(22) Date of filing: 25.03.87

(54) Package.

(30) Priority: 03.04.86 GB 8608158

(43) Date of publication of application:
07.10.87 Bulletin 87/41

(45) Publication of the grant of the patent:
06.06.90 Bulletin 90/23

(84) Designated Contracting States:
AT BE CH DE ES FR GB GR IT LI NL SE

(56) References cited:
US-A- 4 096 948
US-A- 4 228 945
US-A- 4 579 743

(73) Proprietor: UNILEVER NV, Burgemeester
s'Jacobplein 1 P.O. Box 760, NL-3000 DK Rotterdam(NL)
(84) Designated Contracting States: BE CH DE ES FR GR IT LI
NL SE AT

(73) Proprietor: UNILEVER PLC, Unilever House Blackfriars
P.O. Box 68, London EC4P 4BQ(GB)
(84) Designated Contracting States: GB

(72) Inventor: Yates, Deborah Jane, 27 Manor Road,
Toddington Beds.Lu5 6AH(GB)

(74) Representative: Tate, Rodney Vevers et al, UNILEVER
PLC Patents Division P.O. Box 68 Unilever House,
London EC4P 4BQ(GB)

ACTORUM AG

## Description

The invention relates to a packaged food product containing an at least partly baked or partly fried food product to be heated in a microwave oven.

US-A 4 096 948 and US-A 4 228 945 disclose cartons which are adapted for heating food products in microwave ovens. These cartons are provided with openings for the passage of heat and gases.

It has been discovered that the crispness of parfried products such as potato chips, on microwave heating, can be improved by enclosing these products in a packaging material of adequate porosity.

Therefore the invention relates to a packaged food product as set out in claim 1.

This steam-permeable material allows the rapid evaporation of the surface moisture during microwave heating, resulting in a crisp outer surface.

The porosity of the packaging material can be measured by the Bendtsen test, which gives the amount of air per minute (in ml) passing through $10 \text{ cm}^2$ of packaging material by an effective pressure of 150 mm water. A package comprising a packaging material with a porosity of more than 200 ml as measured by the Bendtsen test gives good results. Preferably, the packaging material has a porosity of more than 400 ml as measured by the Bendtsen test.

Although the porosity of the packaging material can be much higher than the minimum values given here, care must be taken that the porous packaging material still provides suitable protection of its contents against contamination.

Many steam-permeable packaging materials are suitable for use in a package for microwave heating parfried food. Best results, however, are obtained by the use of absorbing paper as steam- and microwave-permeable packaging material.

In order to prevent migration of fat from the product through the package material it is to be preferred that the packaging material is grease resistant.

To prevent drying out during storage and thereby extending shelf life of the microwaveable products, it is preferred to overwrap the package in a moisture-impermeable wrapper, which is to be removed before microwave heating. The wrapper is preferably, but not necessarily used for enclosing a multiplicity of individual packages.

Optionally the package also comprises a tray to support the food article. After heating and removing the steam- and microwave-permeable packaging material, the food can be consumed from the tray.

If the package contains a particulate parfried food product, it is preferred to arrange these particulates in a single layer. This is more efficient at absorbing the microwave energy and avoids building up steam traps between the particulates. All kinds of parfried food products can be reheated in a package as described above. It was found, however, that this package is especially suitable for reheating microwaveable parfried potato chips.

## Examples

### Example I

Microwaveable parfried potato chips are prepared by lightly frying the chips for 4.5 minutes at 180°C, rapidly freezing this parfried product and sprinkling salt on the surface of the frozen chips. 90 grams of the product are packed in an absorbing paper bag with a porosity of 500 ml as measured by the Bendtsen test. The package is reheated in a microwave oven for 90 secs with 1000 W power. The loss of weight due to steam evaporation is 15 grams. After the microwave treatment the bag is opened and left to stand for 1 minute. This leads to a further evaporation of about 1 gram. This results in a good crispy product with the quality of freshly fried chips.

### Example II

A pizza is prepared by parbaking at 220°C for 5 minutes a dough sheet which contains 60 weight% wheat-flour, 30 weight% water, 5 weight% fat, 4 weight% yeast and 1 weight% salt. A pizza topping comprising sauce, vegetables and cheese, is applied to the parbaked pizza. The pizza is divided into individual portions which are each loaded on a ribbed or perforated tray. Each tray is enrobed with a porous paper film with a porosity of 300 ml as measured by the Bendtsen test. Ten of these individual packages are packed in an outer moisture-impermeable package and frozen. The frozen pizza is reheated by removing the outer layer and heating the individual packages in a microwave oven for 120 seconds with 650 W power. After microwave treatment, the absorbing paper is removed and the product can be eaten from the tray. The heated pizza is of good quality and tastes like a freshly oven-baked pizza.

### Example III

A dough is prepared by kneading a mixture of 54 weight% flour, 19 weight% fat, 19 weight% water, 7 weight% sugar and 1 weight% salt. The dough was rolled out to approximately 2 mm thickness and cut into 8 × 14 cm rectangles. The edges of the dough sheet were brushed with beaten egg. A filling matrix containing 31 weight% sugar, 30 weight% apple puree, 29.6 weight% water, 6.2 weight% starch (Tenderfil 8), 2 weight% malic acid, 1 weight% sodium citrate and 0.2 weight% ascorbic acid was prepared and heated until the starch gelatinized. The filling matrix was mixed with coarsely chopped apple pieces in the ratio 1:2 matrix to apple. One spoonful of this mix is placed in the centre of the dough sheet. The dough sheet is folded up and the edges were pressed down to seal them. The product is dipped in an adhesive batter, drained briefly and parfried for 12 minutes at 185°C. The pie is packed in an adsorbing paper bag with a porosity of 700 ml as measured by the Bendtsen test. The package is reheated in a microwave oven for 40 seconds with 1000 W power.

This results in a warm, tasteful, crisp apple pie, which is not soggy on the outside.

**Claims**

1. A packaged food product for use in a microwave oven comprising an at least partly baked or partly fried food product enrobed in a cooking package and optionally supported on a tray also within said package, wherein said cooking package consists of a microwave permeable packaging sheet material having a porosity of more than 200 ml as measured by the Bendtsen test whereby the cooking package is permeable to steam but provides protection against contamination of the food product.

2. A product according to claim 1, wherein said packaging material has a porosity of more than 400 ml as measured by the Bendtsen test.

3. A product according to claims 1 or 2, wherein the packaging material is absorbing paper.

4. A product according to claims 1 to 3, wherein the packaging material is also grease resistant.

5. A product according to claims 1 to 4, also comprising an outer moisture-impermeable layer to be removed before microwave heating.

6. A product according to claims 1 to 5, also comprising a tray to support the food article.

7. A product according to claims 1 to 6, containing a particulate parfried food product arranged in a single layer.

8. A product according to claims 1 to 7, containing parfried potato chips.

9. Method for reheating a packaged food product comprising an at least partly baked or partly fried food product contained in a cooking package as defined in one or more of the preceding claims, which method comprises placing the cooking package in a microwave oven and heating the food product by microwave irradiation.

**Patentansprüche**

1. Verpacktes Lebensmittelprodukt zur Verwendung in einem Mikrowellenherd umfassend ein zumindest teilweise gebackenes oder teilweise gebratenes Lebensmittelprodukt, das in einer Kochverpackung eingehüllt und gegebenenfalls auf einer ebenfalls innerhalb dieser Verpackung befindlichen Schale angeordnet ist, wobei diese Kochverpackung aus einem mikrowellendurchlässigen Verpackungsfolienmaterial mit einer Porosität von mehr als 200 ml, gemessen nach dem Bendtsen-Test, besteht, welche Kochverpackung für Dampf durchlässig ist, aber einen Schutz gegen Verunreinigung des Lebensmittelproduktes vorsieht.

2. Produkt nach Anspruch 1, wobei das Verpackungsmaterial eine Porosität von mehr als 400 ml, gemessen nach dem Bendtsen-Test, aufweist.

3. Produkt nach den Ansprüchen 1 oder 2, wobei das Verpackungsmaterial absorbierendes Papier ist.

4. Produkt nach den Ansprüchen 1 bis 3, wobei das Verpackungsmaterial auch fettfest ist.

5. Produkt nach den Ansprüchen 1 bis 4, das auch eine äußere feuchtigkeitsundurchlässige Schicht umfaßt, die vor dem Mikrowellenerhitzen entfernt werden muß.

6. Produkt nach den Ansprüchen 1 bis 5, das auch eine Schale zum Lagern des Lebensmittelgegenstandes aufweist.

7. Produkt nach den Ansprüchen 1 bis 6, das ein teilweise gebratenes teilchenförmiges Produkt enthält, das in einer einzigen Schicht angeordnet ist.

8. Produkt nach den Ansprüchen 1 bis 7, das teilweise gebratene Kartoffelchips enthält.

9. Verfahren zum Wiedererhitzen eines verpackten Lebensmittelproduktes umfassend ein zumindest teilweise gebackenes oder teilweise gebratenes Lebensmittelprodukt, das in einer Kochverpackung, wie in einem oder mehreren der vorhergehenden Ansprüche definiert, enthalten ist, welches Verfahren darin besteht, daß die Kochverpackung in einen Mikrowellenherd gegeben und das Lebensmittelprodukt durch Mikrowellenstrahlung erhitzt wird.

**Revendications**

1. Produit alimentaire emballé destiné à être réchauffé dans un four à micro-ondes, qui comprend un produit alimentaire au moins partiellement cuit au four ou partiellement frit enrobé dans un emballage de cuisson et, facultativement, supporté sur un plateau également à l'intérieur dudit èmballage, dans lequel ledit emballage de cuisson est formé d'une feuille d'emballage perméable aux micro-ondes ayant une porosité de plus de 200 ml mesurée par le test de Bendtsen de sorte que l'emballage de cuisson est perméable à la vapeur d'eau mais assure la protection contre la contamination.

2. Produit selon la revendication 1, dans lequel ladite matière d'emballage présente une porosité de plus de 400 ml mesurée par le test de Bendtsen.

3. Produit selon la revendication 1 ou 2, dans lequel la matière d'emballage est un papier absorbant.

4. Produit selon les revendications 1 à 3, dans lequel la matière d'emballage est également résistante à la graisse.

5. Produit selon les revendications 1 à 4, qui comprend également une couche extérieure imperméable à l'humidité qu'il faut enlever avant le chauffage aux micro-ondes.

6. Produit selon les revendications 1 à 5, qui comprend également un plateau pour supporter l'article alimentaire.

7. Produit selon les revendications 1 à 6, qui contient un produit alimentaire particulaire partiellement frit disposé en une couche unique.

8. Produit selon les revendications 1 à 7, qui contient des chips partiellement frits.

9. Procédé pour réchauffer un produit alimentaire emballé comprenant un produit alimentaire au moins partiellement cuit ou partiellement frit dans un emballage de cuisson tel que défini dans une ou plusieurs revendications précédentes, procédé qui consiste à placer l'emballage de cuisson dans un four à micro-ondes et à chauffer le produit alimentaire par irradiation par micro-ondes.